# EUROPEAN PATENT SPECIFICATION

(11) **EP 0 370 944 B1**
(45) Date of publication and mention of the grant of the patent: **20.04.1994**
(21) Application number: 89710078.0
(22) Date of filing: 17.11.1989
(51) Int. Cl.: B60C 19/00

(54) **Fluid-charged vehicle tire**
Luftreifen mit Flüssigkeit gefüllt
Bandage pneumatique à ballast liquide

(30) Priority: 19.11.1988 JP 293345/88; 26.08.1989 JP 219069/89
(43) Date of publication of application: 30.05.1990
(73) Proprietor: Sarui, Kiichiro, Shinjuku-ku Tokyo (JP); Kato, Hiroshi, Chiba-shi Chiba (JP); Kubota, Yoshio, Kawasaki-shi Kanagawa (JP); Sarui, Kazuhiro, Varde California 90274 (US)
(72) Inventor: Kiichiro, Sarui, Tokyo (JP); Hiroatsu, Nagata, Tokyo (JP); Hiroshi, Kato, Chiba (JP); Hiroyuki, Doe, Hyogo, (JP); Tsutomu, Katsura, Tokyo (JP)
(74) Representative: Patentanwälte Lippert, Stachow, Schmidt & Partner

(56) References cited:
- FR-A- 1 407 770
- US-A- 3 747 660
- US-A- 4 137 206

## Description

### BACKGROUND OF THE INVENTION

### Field of the Invention

The present invention concerns a vehicle tire in which pressurized air and water are charged into the air tight inside portion of a tire used for cars or like other vehicles and, more particular, it relates to a tire capable of improving running stability and performance.

### Description of the prior art

Tires used for vehicles such as cars are usually charged with pressurized air at the inside of an air tube contained in the tire or directly in an airtight plenum of a tubeless tire for absorbing shocks exerted from a road surface.

Further, such a pneumatic tire also has an important concern on the running stability and steering performance and they are controlled by adjusting the pressure of air charged in the tire. The tire also has a more important concern with a braking operation, in particular, upon emergency braking during high speed running of a car. It is highly desirable that a braking distance from the initiation of the braking operation till the complete stopping of the car is as short as possible from a safety point of view.

As far as the tire is concerned, the braking distance can be shortened, generally, by forming a grooved pattern of an appropriate design on the tread surface of a tire so as to increase the frictional resistance or ground gripping effect of the tire.

The grooved pattern formed on the tread can surely provide increased frictional resistance relative to the road surface, but it is not yet completely sufficient for providing satisfactory effect upon emergency braking. A car tire readily suffers from denaturation and deformation (abrasion) due to heat of friction generated between the tire and the load surface. Then, the grooved rubber tread is gradually made flat to lose its road gripping effect.

It has also been attempted recently to provide a rolled friction sheet adapted to be rapidly released upon emergency braking and spread between the tire and the road surface, thereby compulsorily forming anti-skid friction between them. However, use of the rolled frictional sheet may be reliable but it complicates the structure of a car.

So-called ballasted vehicle tires in which fluid ballast is charged have been proposed in heavy load vehicles such as farm tractors and earth moving equipment, in order to prevent imbalance of weight and reduction of vibrations as disclosed, for example, in U.S. Patent Nos. 3,747,660, 3,312,265, 3,230,999 and 2,695,047.

The present inventor's have made various study and experiment in charging a fluid such as water into a tire of a usual passenger car or the like in order to improve the running stability and performance, in particular, the braking performance, that is, shortening of the braking distance.

Then, it has been found that a vehicle tire in which a fluid, preferably, water is charged together with pressurized air into an airtight inside of a tire, at a ratio within a range from 5 to 95% by volume of the pressurized air can satisfy the foregoing purpose.

It has been, surprisingly, found that a fluid having a specific gravity greater than that of air charged into the airtight inside of a tire together with a pressurized air can greatly moderate vibrations and shocks exerted during running of a car, improve running stability and performance and, in particular, reduce the braking distance remarkably. The substantial portion of this new discovery was filed previously in our Japanese Patent Application No. 293345/1988 and 219069/1989, which are cited in the present application as a base for the present invention but not claimed for patent.

It has not yet been apparent at present why such an unexpected effect can be obtained, but it is assumed to be based on a so-called fly wheel effect caused by the increase of inertia due to increased weight of the tire that functions as a high speed body of rotation. When water is charged in a pneumatic tire, it is localized at the inner peripheral circumference of the tire due to the centrifugal force during high speed rotation and the tread surface of the tire is forced more strongly and with increased area of contact onto the road surface, to grip it firmly.

Furthermore, in a conventional pneumatic tire, although the inner surface thereof is cooled to some extent from metal components of a car such as a rim by way of a pressurized air charged in the tire. However, since air sealed in the tire has no sufficient cooling performance, the conventional pneumatic tire usually suffers from heat of friction during running or upon braking of a car and is denatured or deformed (abrasion), particularly, in the grooved tread surface, to result in undesired effect on the running stability, braking effect, etc.

On the other hand, in the water-charged tire according to the present invention, the inner surface thereof is always in contact with the fluid such as water having greater cooling performance by centrifugal force during rotation and, further, the water itself is effectively cooled from the outside by way of the metal components. Accordingly, the heated tire can be cooled effectively to be prevented from being thermally denatured or deformed, and always maintain an effective gripping force to the road surface and keep the running stability, braking effect, etc. always constant.

Further although we had initially considered that a fuel cost would naturally be increased more or less due to the increased weight caused by the charging of the water, it has, surprisingly, been found that the cost is rather decreased as compared with the case of usual pneumatic tires as far as our experimental running test is concerned.

As the fluid to be charged in the tire water is most desirable in view of specific gravity, specific heat calorie, easy availability, inert chemical nature, etc.

However, tires used, for example, in high latitudes, etc. where atmospheric temperature in winter seasons is often lowered to less than the freezing point (0^{o}C) of water, it is afraid that water charged in the tire is frozen to make the tire rotation remarkably instable, in particular, upon starting of a vehicle. Although the freezing of water can be prevented to some extent by addition of an appropriate anti-freezing agent, it is more preferred to employ such a fluid as having physical properties just like water but not frozen even under severe cold conditions.

### OBJECT AND SUMMARY OF THE PRESENT INVENTION

It is, accordingly, an object of the present invention to provide a vehicle tire charged with water capable of absorbing vibrations and inpact shocks during running of a car and capable of improving running stability and performance.

Another and more practical object of the present invention is to provide a vehicle tire charged with water capable of remarkably shortening a braking distance, in particular, upon emergency braking of a vehicle, as well as operating effectively even under cold climate condition.

The foregoing object of the present invention can be attained by a vehicle tire in which pressurized air and water are charged into the air tight inside portion of a tire characterized by charging from 10% to 60% by volume of water based on 100% by volume of said pressurized air, and from 0.2% to 3% by weight of a highly water absorbing polymer, capable of absorbing a great amount of water and swelling into fine spherical and easily fluidizable gel particles, based on 100% by weight of water.

"Highly water absorbing polymer" referred to herein means such polymers as capable of absorbing from several tens to several hundreds times by volume of water and irreversibly swelling into gel, which have been used recently in various fields of art, for example, as water absorbents for construction materials and disposable diapers.

The highly water absorbing polymers used in the present invention are those capable of rapidly absorbing a great volume of water and forming fine spherical and easily flowable particles substantially comprising water (hereinafter simply referred to as hydrospheres). As one of typical examples of such polymers, there can be mentioned a group of polysodium acrylates represented by the general formula (CH₂=CHCOONa)ₙ as detailled later. When such a polymer is charged together with water in the plenum of a tire, it forms highly flowable fine spheres which have similar physical properties such as specific gravity to those of water.

In particular, even if the atmospheric temperature is lowered below the freezing point of water, the hydrospheres are kept in the initial individual spheric shape while maintaining the absorbed water therein and free from freezing cohesion to each other.

Accordingly, the tire charged with such hydrosperes can be used with no trubles at all even during severe cold winter seasons in high latitudes.

The present invention can be further improved if the water to be charged into the tire contains an anti-freezing agent highly miscible with the water.

Furthermore it is advantageous if the water to be charged into the tire is added an anti-rust agent from 0.1% to 7.5% by weight based on 100% by weight of water for preventing rust which could be formed at metal components in contact with the tire.

For preventing the hydrospheres from depositing to the inner surface of the tire the water to be charged into the tire is added a surface active agent from 0.1% to 1.5% by weight based on 100% by weight of water.

The effects of the present invention as described above can further be enhanced by forming a plurality of partitioning protrusions which are radially raised inward from the inner circumferential surface to the center of rotation of the tire and spaced apart from each other in the rotating direction of the tire.

In this improved tire structure having such partitioning protrusions (hereinafter referred to as radial protrusions), running stability, braking distance, etc. can further be enhanced.

The reason why such an improved effect can be obtained is not always apparent at present, but it is assumed that the radial protrusions give a flow resistance to charged water which flows circumferentially along the inner surface of the tire during rotation and water fluid is uniformly distributed centrifugally to each of the portions at the inner circumferential surface of the tire and urges the tire tread uniformly and more effectively to a road surface.

### DETAILED DESCRIPTION OF THE INVENTION

The amount of water used relative to the pressurized air charged in the tire is generally from 5 to 95% by volume of the pressurized air.

If the amount of water is less than 5% by volume of air, the aimed effect due to the charging of water can not be obtained substantially. On the other hand, if the amount of water exceeds 95%, usual shock-absorbing effect of pressurized air is deteriorated. A preferred range of water is from 10 to 60% by volume of the pressurized air from a practical point of view.

In another embodiment an anti-freezing agent is mixed into water. Well-known anti-freezing agents highly miscible with water such as ethylene glycol and glycerin can be used preferably.

The amount of the anti-freezing agent, ranges about from 5 to 30% by weight based on the weight of water.

Ethylene glycol, glycerin, etc. are mentioned here as the anti-freezing agent, but they may also be used as a partial substitute for water to be charged in the tire.

As has been described above, freezing hazard in the water-charged tire can be prevented in the present invention by absorbing charged water into a highly water absorbing polymer capable of absorbing a great volume of water, e.g., from several tens or several hundreds times by volume of water and irreversibly forming fine spherical and easily flowable particles (hereinafter referred to as hydrospheres).

Referring more specifically, polysodium acrylates can be mentioned as one of typical examples of the highly water absorbing polymer suitably used in the present invention and they are represented by the general formula: (CH₂=CHCOONa)ₙ. Actually, the polymer may contain, in addition to Na, 0.4% of potassium, 0.2% of aluminum, 120 mg/kg of Si and 60 mg/kg of Ca based on the entire polymer.

Among the polysodium acrylates as described above, particularly preferred are those having a water absorbing performance of about 70 to 300 times by volume, water absorbing rate of from 3 sec to 145 sec, expanding ratio of about 2.5, bulk density of 0.94 and average grain size of 20 to 900 µm.

Actual products of such polysodium acrylate are marketed from Osaka Organic Chemical Ind., Japan, under the trade name of PQ POLYMER including various grades, for example, as shown in the table below.

**Table**

| (PQ POLYMER) | | | | |
|---|---|---|---|---|
| | Average grain size (µm) | Grain size after absorption (mm) | Water absorbancy | Absorbing rate (sec) |
| PL-100 | 20- 30 | 0.1 | 70-140 | 2.5 |
| BL-100 | 70- 140 | 0.3-0.5 | 70-140 | 19 |
| BL-151 | 300- 500 | 1.0-2.0 | 70-140 | 144 |
| BL-150 | 900-1100 | 3.0-4.0 | 70-140 | 240 |
| BH-100 | 70- 140 | 0.3-0.5 | 300-500 | 17 |
| note: Grain size after absorption was measured after absorbing 50 vol. times of water. Absorbing rate was measured under room temperature. Particle shape after absorption varied from powder to coarse grains depending on the grade. | | | | |

In the present invention, the highly water absorbing polymer is added to the charged water in an amount about from 0.2 to 3% by weight of water depending on the grade thereof.

If the amount of the polymer is insufficient, water can not completely be absorbed but remains as it is to bring about a worry of freezing.

On the other hand, if the amount of the polymer is excessive, the amount of water absorbed in the polymer is relatively insufficient to reduce the water content in the hydrospheres and, thus, reduce the bulk density (apparent specific gravity), making it difficult to obtain the same effect as that of water.

The polysodium acrylate may be added to water, for example, by charging a predetermined amount of the polymer together with pressurized air into the tire and then introducing a predetermined amount of water in a form of liquid or vapor to form hydrospheres or charging hydrospheres formed by previously admixing a predetermined amount of polysodium acrylate with water into a tire by using a pressurizing pump.

In the present invention, an anti-rust agent and/or a surface active agent may be added to the water.

The anti-rust agent has a function of inhibiting rust which may possibly be formed at metal components in contact with the tire caused by the presence of water in the tire. It is added usually within a range from about 0.1 to 7.5% by weight based on the weight of the water.

The surface active agent has a function of preventing the hydrospheres from depositing to the inner surface of the tire. It is usually used at a ratio from about 0.1 to 1.5% by weight based on the weight of water.

In a modified embodiment of the present invention a plurality of partitioning protrusions which are radially raised inward from the inner circumferential surface to the center of rotation of the tire and spaced apart from each other in the rotating direction of the tire (hereinafter referred to as the radial protrusions). The radial protrusions are formed so that they provide flow resistance to water charged in the tire and uniformly distribute the same along the toroidal inner circumferential surface of the tire under a centrifugal force upon high speed rotation.

In this structure, the radial protrusions at the inside of the tire are, preferably, formed to the inner surface of the tire at such a poloidal position as corresponding to that of tread region formed at the outer surface of the tire, since water is usually localized there by the centrifugal force.

There is no particular restriction for the shape of the radial protrusion and any of appropriate shapes can be selected while considering ease of fabrication or the like. For instance, a pattern similar to a grooved pattern usually formed at the tread of the tire surface, a pattern comprising a plurality of independent spots or a pattern comprising a plurality of stripes each extended in the poloidal direction and spaced apart from each other in the toroidal direction of the tire may be used.

The radial height for each of the protrusions, that is, the distance between the bottom and the top of the radial protrusion somewhat varies depending on the diameter of the tire, amount of water to be charged, etc., and it ranges preferably from 5 mm to 30 mm.

### DESCRIPTION OF THE ACCOMPANYING DRAWINGS

Fig. 1(a) is schematic explanatory view of a tire according to the present invention illustrating a pattern of radial protrusions formed to an inner circumferential surface of a tire;
Fig. 1(b) is a schematic plan view for a portion of the tire shown in Fig. 1(a);
Figs. 2(a) and 2(b) illustrate a modified pattern of the radial protrusions corresponding to Figs. 1(a) and 1(b) respectively; and
Figs. 3(a) and 3(b) illustrate another modified pattern of the radial protrusions.

### EXAMPLE

The water-charged tire of the present invention is to be described in more details referring to an example based on the results of basic test experiments.

### Basic Test Experiment 1 (Water-charged Tire)

Well-maintained and conditioned passenger cars (CEDRIC N 230, manufactured by Nissan, Nos A, B, C, D and S), were attached with tubeless pneumatic tires charged with water (A - D) and usual tubeless pneumatic tires (S) as a comparison, respectively, and they were used for running test on a test road for confirming the braking effect and the running stability in accordance with customary test methods (Test conditions: weather, fine; temperature, 21^{o}C; relative humidity, 45%).

Each of the cars was caused to run at various speeds shown in Table 1 and the braking distance was examined, in comparison, between the water-charged tires (A - D) and the conventional pneumatic tires (s). Test results are shown in Table 1.

Water was charged into each of the plenum of the tubeless tires (A,B,C and D) by way of a sealing damper of the tire at each of the volume ratios relative to the volume of pressurized air shown in Table 1.

**Table 1**

| Test for Braking Distance | | | | | |
|---|---|---|---|---|---|
| Car speed (km/h) | Water:air (vol. ratio) | | | | |
| | S | A | B | C | D |
| | (Comparative) | (Water-charged tire) | | | |
| | 0 | 1:9 | 2:8 | 3:7 | 5:5 |
| 20 | 9 | 8.5 | 8.1 | 7.8 | 7.2 |
| 30 | 15 | 13.5 | 13.0 | 12.6 | 12.3 |
| 40 | 22 | 19.0 | 18.5 | 18.5 | 17.1 |
| 50 | 32 | 28.5 | 26.5 | 25.3 | 24.0 |
| 60 | 44 | 39.5 | 43.0 | 36.2 | 35.5 |
| 70 | 58 | 45.0 | 43.0 | 41.3 | 39.0 |
| 80 | 76 | 67.0 | 65.6 | 60.2 | 55.7 |
| 90 | 93 | 82.4 | 79.3 | 78.6 | 76.5 |
| 100 | 112 | 98.6 | 95.2 | 91.8 | 90.3 |

As apparent from Table 1, the braking distance was shortened by about 10%, in average, for each of the running speeds in the case of using the water-charged tires (A - D) as compared with the case of using the usual pneumatic tires (S). The distance reducing effect was improved along with the increase in the water:air ratio within the range shown in Table 1.

Further, improved anti-vibration effect and steering stability (free from dangerous zig-zag running) were also recognized in the case of using the water-charged tires.

These effects were also increased gradually as the car speed was increased after the starting.

Using the same passenger cars as described above, running test was conducted for two months for the water-charged tires and the conventional pneumatic tires and average running kilometers per litre of gasoline was examined. Test results are as shown in Table 2 below.

**Table 2**

| Average Running Kilometer (km/l (gasoline)) | | | | | |
|---|---|---|---|---|---|
| | A | B | C | D | Average for A-D (S)(km/l) |
| Sept., 1988 (May, 1988) | 6.81 *(5.23) | 5.55 (5.13) | 6.10 (4.46) | 6.13 (5.28) | 6.14 (5.02) |
| Oct., 1988 (June, 1988) | 5.46 *(5.59) | 5.74 (5.41) | 5.96 (4.48) | 6.26 (4.98) | 5.85 (5.11) |
| Average for 2 month | 6.13 *(5.41) | 5.64 (5.27) | 6.03 (4.47) | 6.14 (5.13) | 5.99 (5.07) |
| Note: Each of numerical values in ( ) indicates the result for conventional pneumatic tires. | | | | | |

As apparent from Table 2, the average running distance per litre of fuel was increased in the case of using the water-charged tires as compared with the case of using the conventional pneumatic tire.

### Basic Test Experiment 2 (Water-charged tire with radial protrusion)

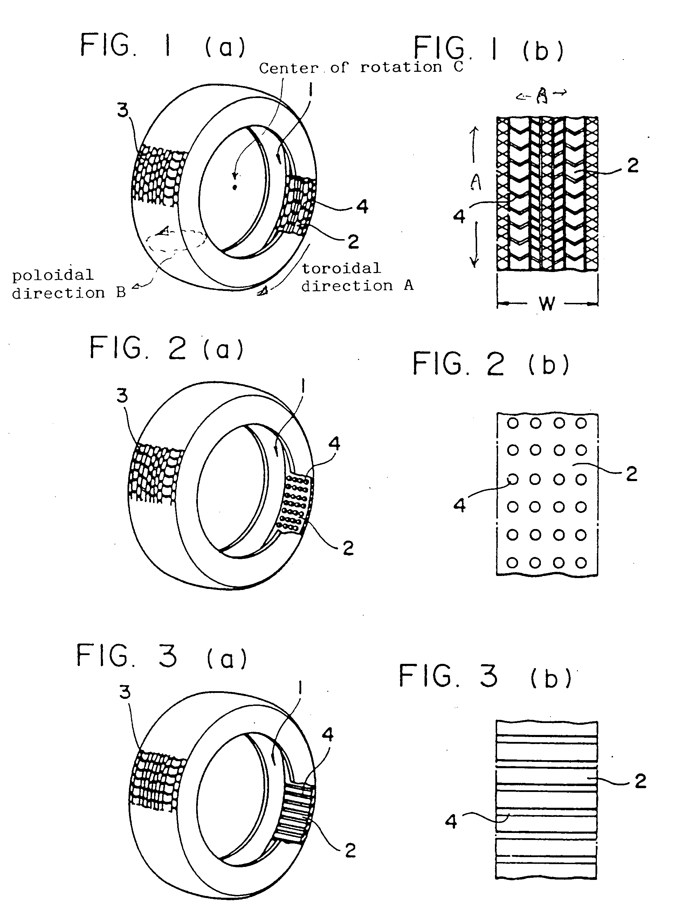

As shown in Figs. 1(a) and 1(b), radial protrusions 4 were formed along the inner circumferential surface 2 of a tubeless tire 1 over a poloidal region (lateral width W) corresponding to the grooved pattern 3 formed on a tread at the surface of the tire 1. The distance between the bottom and the top of each of the radial protrusions 4 was about 15 mm.

The same passenger cars A, B, C, D and S as used in Test Experiment 1 were attached with water-charged tires and with usual pneumatic tires respectively and tested for confirming the braking effect and the running stability in accordance with customary test methods in the same ways as in Test Experiment 1. Test results are shown in Table 3.

**Table 3**

| Test for Braking Distance | | | | | |
|---|---|---|---|---|---|
| Car speed (km/h) | Water:air (vol. ratio) | | | | |
| | S | A | B | C | D |
| | (Comparative) | (Water-charged tire) | | | |
| | 0 | 1:9 | 2:8 | 3:7 | 5:5 |
| 20 | 9 | 8.3 (92.2) | 7.8 (86.6) | 7.6 (84.4) | 6.9 (76.6) |
| 30 | 15 | 13.1 (87.3) | 12.6 (84.0) | 12.2 (81.3) | 12.0 (75.0) |
| 40 | 22 | 18.6 (84.5) | 17.6 (80.0) | 17.2 (78.1) | 16.1 (73.1) |
| 50 | 32 | 27.6 (86.2) | 25.5 (79.6) | 24.4 (76.2) | 23.3 (72.3) |
| 60 | 44 | 38.7 (87.9) | 39.2 (89.0) | 35.5 (80.6) | 34.9 (79.3) |
| 70 | 58 | 43.8 (75.5) | 39.4 (67.9) | 40.3 (69.1) | 38.2 (65.8) |
| 80 | 76 | 65.2 (85.7) | 63.2 (83.1) | 58.8 (77.3) | 54.1 (71.1) |
| 90 | 93 | 80.1 (86.1) | 78.0 (83.8) | 76.8 (82.5) | 74.9 (80.5) |
| 100 | 112 | 97.0 (86.6) | 92.7 (82.7) | 90.0 (80.3) | 89.8 (80.1) |

| | | | | | |
|---|---|---|---|---|---|
| * Each of the values in ( ) means a ratio to the comparison assumed as 100. | | | | | |

As apparent from Table 3, the braking distance of the water-charged tires was reduced by about 7 to 20% for each of the running speeds as compared with the comparative pneumatic tires. Further, even compared with the results for the water-charged tires in Test Experiment 1 (with no radial protrusions) about 3% reduction was recognized.

In other tires of modified protrusions shown in Figs. 2(a), (b) and Figs 3(a), (b), similar results with those in Test Experiment 2 were also obtained respectively.

Using the same passenger cars (A - D), running test was conducted for two months using the water-charged tires in Test Experiment 2 and the conventional pneumatic tires, and average running kilometers per litre of gasoline was determined in the same way as in Test Experiment 1. Test results are as shown in Table 4 below.

**Table 4**

| Average Running Kilometer (km/l (gasoline)) | | | | | |
|---|---|---|---|---|---|
| | A | B | C | D | Average for A-D (S)(km/l) |
| July 1988 (May, 1988) | 6.34 <(5.23) | 6.41 (5.13) | 6.25 (4.46) | 6.20 (5.28) | 6.30 (5.02) |
| Aug., 1988 (June, 1988) | 5.97 <(5.59) | 6.59 (5.41) | 6.27 (4.48) | 6.14 (4.98) | 6.24 (5.11) |
| Average for 2 months | 6.15 <(5.41) | 6.50 (5.27) | 6.26 (4.47) | 6.17 (5.13) | 6.27 (5.07) |
| Note: Each of numerical values in ( ) indicates results for comparative pneumatic tires. | | | | | |

As apparent from Table 4, the average running distance per litre of gasoline was increased in the case of using the tires in Test Experiment 2 as compared with the case of using the conventional pneumatic tires.

### Example

An aqueous solution was prepared by adding 3 parts by weight of sodium borate as an anti-rust agent and 0.3 parts by weight of polyoxyethylene alkyl ether as a surface active agent to 100 parts by weight (100 g) of a mixture consisting of water containing 60% by volume of ethylene glycol.

Then, when 2 parts by weight of powdery polysodium acrylate (PQ POLYMER BL-100; trade name of products, manufactured by Osaka Organic Chemical Ind., Japan) was admixed based on 100 parts by weight of the aqueous mixture, the polysodium acrylate powder absorbed all the amount of the aqueous solution and was swollen into substantially transparent and elastic fine spherical particles (hydrospheres) of about 0.1 mm in average grain size in the total volume of 120 ml. The pH value was 7.8.

The hydrospheres had a specific gravity (apparent specific gravity) of about 0.95 and had a high fluidity with a an angle of rest of about 60^{o}. When the hydrospheres were maintained for 24 hours under a low temperature of about -25^{o}C while standing still or under stirring, no particular change was recognized for the physical property, in particular, flowability of the hydrospheres.

The hydrospheres could easily be charged into the plenum of the tire by means of a usual fluid pump through an air injection port of the tire.

Then, pressurized air was charged into the plenum of the tire in the same manner by using a customary pressurized air charging method.

When the tire was attached to a rotation tester and rotated at a circumstantial temperature of about 20^{o}C for about 48 hours at 2000 rpm, no abnormal vibrations, etc. were recognized as compared with the case of usual pneumatic tire. The tires charged with the hydrospheres described above were mounted on the passenger cars as described in Basic Test Experiments 1 and 2, and the same running tests were conducted. Then, advantageous effects such as shortening in the braking distance, improvement in the running stability and reduction of fuel cost can be recognized in the same manner as in the case of the tire charged only with water.

When the tire charged with such hydrospheres were left under accelerated corrosion conditions at 60 days, neither deposition of the spheres at the inside of the tire nor corrosion of metal components was observed.

## Claims

1. A vehicle tire in which pressurized air and water are charged into an air tight inside portion of a tire, characterized by charging from 10% to 60% by volume of water based on 100% by volume of said pressurized air, and from 0.2% to 3% by weight of a highly water absorbing polymer, capable of absorbing a great amount of water and swelling into fine spherical and easily fluidizable gel particles based on 100% by weight of the water.

2. A vehicle tire according to claim 1, wherein said highly absorbing polymer is a polysodium acrylate represented by the general formula (CH₂=CHCOONa)ₙ.

3. A vehicle tire according to claim 1, wherein the water to be charged into the tire contains an anti-freezing agent highly miscible with the water.

4. A vehicle tire according to claim 1, wherein from 0.1% to 7.5% by weight of an anti-rust agent is added based on 100% by weight of water.

5. A vehicle tire acording to claim 1, wherein from 0.1% to 1.5% by weight of a surface active agent is added based on 100% by weight of water.

6. A vehicle tire according to claim 1, wherein a plurality of partitioning protrusions which are radially raised inward from the inner circumferential surface to the center of rotation of the tire and formed each being spaced apart in the rotating direction of said tire.

## Patentansprüche

1. Fahrzeugreifen, bei dem unter Druck stehende Luft und Wasser in einen luftdichten Innenteil eines Reifens eingefüllt sind, **gekennzeichnet durch** Auffüllen von 10 bis 60 Volumenprozent mit Wasser bezogen auf 100 Volumenprozent der unter Druck stehenden Luft und von 2 bis 3 Gewichtsprozent mit einem stark Wasser absorbierenden Polymer, das geeignet ist, eine große Menge des Wassers zu absorbieren und das zu feinen kugelförmigen und leicht fließenden Gelpartikeln aufquillt, bezogen auf 100 Gewichtsprozent des Wassers.

2. Fahrzeugreifen nach Anspruch 1, bei dem das stark Wasser absorbierende Polymer ein Polynatriumacrylat entsprechend der allgemeinen Formel (CH₂=CHCOONa)ₙ ist.

3. Fahrzeugreifen nach Anspruch 1, bei dem das Wasser, welches in den Reifen zu füllen ist, ein Frostschutzmittel enthält, das mit dem Wasser gut mischbar ist.

4. Fahrzeugreifen nach Anspruch 1, bei dem von 0,1 bis 7,5 Gewichtsprozent von einem Rostschutzmittel bezogen auf 100 Gewichtsprozent des Wassers beigefügt ist.

5. Fahrzeugreifen nach Anspruch 1, bei dem 0,1 bis 1,5 Gewichtsprozent eines kapillaraktiven Mittels bezogen auf 100 Gewichtsprozent des Wassers beigefügt ist.

6. Fahrzeugreifen nach Anspruch 1, mit einer Vielzahl von unterteilenden Vorsprüngen, die radial erhaben einwärts von der inneren Umfangsfläche zur Drehachse des Reifens und jeweils abstandsweise in der Drehrichtung des Reifens ausgeformt sind.

## Revendications

1. Pneumatique de véhicule, dans lequel de l'air sous pression et de l'eau sont chargés dans une partie intérieure, étanche a l'air, d'un pneumatique, caractérisé en ce qu'il est chargé de 10% à 60% en volume d'eau, sur la base de 100% en volume dudit air sous pression, et de 0,2% à 3% en poids d'un polymère à fort pouvoir d'absorption de l'eau, capable d'absorber une grande quantité d'eau et de gonfler en fines particules de gel sphériques et facilement fluidisables, sur la base de 100% en poids de l'eau.

2. Pneumatique de vehicule selon la revendication 1, dans lequel ledit polymere à fort pouvoir d'absorption de l'eau est un polyacrylate de sodium représenté par la formule générale (CH₂=CHCOONa)ₙ.

3. Pneumatique de véhicule selon la revendication 1, dans lequel l'eau a charger dans le pneumatique contient un agent antigel très miscible a l'eau.

4. Pneumatique de véhicule selon la revendication 1, dans lequel de 0,1% à 7,5% en poids d'un agent antirouille sont ajoutés, sur la base de 100% en poids d'eau.

5. Pneumatique de véhicule selon la revendication 1, dans lequel de 0,1% à 1,5% en poids d'un agent tensioactif est ajouté, sur la base de 100% en poids d'eau.

6. Pneumatique de véhicule selon la revendication 1, dans lequel il est formé une multiplicite de saillies de cloisonnement qui se dressent radialement vers l'intérieur depuis la surface circonférentielle interne vers le centre de rotation du pneumatique, à distance les unes des autres dans la direction de rotation dudit pneumatique.
